# EUROPÄISCHE PATENTSCHRIFT

(11) **EP 0 718 537 B1**
(45) Veröffentlichungstag und Bekanntmachung des Hinweises auf die Patenterteilung: **04.08.1999**
(21) Anmeldenummer: 95119704.5
(22) Anmeldetag: 14.12.1995
(51) Int. Cl.: F16L 27/10

(54) **Flexible Verbindung von Rohren, insbesondere von Abgasleitungsrohren bei Kraftfahrzeugen**
Flexible pipe connection especially for motor vehicle exhaust conduits
Raccord flexible de tuyaux notamment pour tubulures d'échappement de véhicules à moteur

(30) Priorität: 23.12.1994 DE 4446218
(43) Veröffentlichungstag der Anmeldung: 26.06.1996
(73) Patentinhaber: ADAM OPEL AG, 65423 Rüsselsheim (DE)
(72) Erfinder: Schad, Kurt, D-65474 Bischofsheim (DE)
(74) Vertreter: Kümpfel, Heinz, Dipl.-Ing.

(56) Entgegenhaltungen:
- WO-A-94/08169
- DE-A- 2 908 367
- DE-A- 3 146 305
- DE-A- 3 407 500
- DE-C- 835 378
- DE-C- 4 317 334
- FR-A- 658 066
- US-A- 2 451 252
- US-A- 4 243 253

## Beschreibung

Die Erfindung betrifft eine flexible Verbindung von Rohren gemäß dem Oberbegriff von Anspruch 1. Eine derartige Verbindung ist bekannt aus FR-A-658 066.

Eine weitere flexible Verbindung ist aus DE 29 08 367 bekannt. Bei dieser wird die kugelige Fläche von einem hochtemperaturbeständigen verschleißfesten, korrosionsbeständigen Dichtring aus einem Gestrick von Metalldraht und Mineralfaser gebildet, der zwischen einem flanschartigen Ring an dem einen Rohrende und der ringförmigen kugelkonkaven Aufnahme liegt. An den beiden Flanschen greifen Federn an und ziehen sie gegeneinander, so daß der Dichtring unter Druck sowohl am flanschartigen Ring als auch in der kugelkonkaven Aufnahme dichtend anliegt.

Eine solche Verbindung kann um den Mittelpunkt der kugeligen Fläche im Rahmen der Nachgiebigkeit der Federn Schwenkbewegungen ausführen. Dabei wird der Dichtring jedoch einer reibenden Beanspruchung ausgesetzt, die über längere Lebensdauer zu Verschleiß und so auch zu Undichtigkeiten der Verbindung führt.

Um derartige Undichtigkeiten zu vermeiden, ist es gemäß der DE 43 17 334 bekannt, bei derartigen Vorrichtungen zum flexiblen Verbinden von Rohren in Abgasleitungen von Kraftfahrzeugen neben einem Dämpfungskissen aus verpreßtem Metalldraht zwischen stirnseitigen Wandabschnitten an den zu verbindenden Rohrenden einen die beiden Rohrenden verbindenden Metallbalg als Dichtung zu benutzen. Eine solche Vorrichtung kann jedoch nur geringe Winkelbewegungen ausgleichen und dieser Ausgleichsbewegung wird darüber hinaus erheblicher Widerstand entgegengesetzt, wobei immer das Dämpfungskissen durch Walkarbeit mechanisch belastet wird. Ein hoher Widerstand gegen Biegung führt aber bei Abgasleitungen von Kraftfahrzeugen auch zu Reaktionskräften, die von der Aufhängung des Motors sowie der Abgasanlage aufgenommen werden müssen und so zu erhöhtem Geräuschverhalten führen. Nach längerem Betrieb kann die Spannung des Dämpfungskissens nachlassen, so daß dann zusätzliche Klappergeräusche zwischen den beiden übereinandergeschobenen Rohrenden bzw. zwischen den stirnseitigen Wandabschnitten auftreten.

Aufgabe der Erfindung ist es, eine flexible Verbindung der eingangs genannten Art so zu verbessern, daß sie auch bei längerem Betrieb zuverlässig dicht bleibt und Winkelbewegungen über die gesamte Lebensdauer einen gleichbleibenden geringen Widerstand entgegensetzt.

Erfindungsgemäß wird diese Aufgabe durch die Merkmale von Anspruch 1 gelöst.

Bei einer solchen Ausführung dienen die kugelförmigen Flächen der Flansche lediglich zur Zentrierung der beiden verbundenen Rohrenden, während der Metallbalg die Gasdichtung bewirkt und die Kraft für den Formschluß der beiden kugelförmigen Flächen aufbringt. Die Elastizität des Metallbalges läßt einen ausreichenden Schwenkweg der beiden Enden der Rohre um den Mittelpunkt der die Kugelflächen bildenden Kugel zu.

Da der Widerstand gegen Biegen der flexiblen Verbindung im wesentlichen nur von der Reibung zwischen den beiden Kugelflächen der Flansche und im übrigen von der Elastizität des Metallbalges abhängt, wird dieser bei Verwendung von korrosions- und warmfestem Material zumindest für die beiden Flansche über die gesamte Lebensdauer gleichbleibend gering bleiben. Damit entstehen auch keine Störkräfte auf die mit den Abgasleitungsrohren verbundenen Aufhängungselemente.

Zusätzlich zu dem Metallbalg kann über den Metallbalg hinweg eine mit den beiden Rohren verbundene, den Metallbalg umhüllende Zugfeder angeordnet sein.

Eine solche Ausführung entlastet den Metallbalg weitestgehend von der Zugbelastung. Die Wandstärke des Metallbalges kann dünner als bei einer Ausführung ohne diese Zugfeder ausgeführt sein. Darüber hinaus schützen die Windungen der Zugfeder den relativ dünnwandigen Metallbalg vor äußeren mechanischen Verletzungen.

Ausführungsbeispiele der Erfindung sind nachstehend anhand einer Zeichnung näher beschrieben. Es zeigen
- Figur 1:: eine flexible Verbindung im Schnitt;
- Figur 2:: eine abgewandelte Ausführungsform einer flexiblen Verbindung in Seitenansicht.

Zwei Rohre 1 und 2 einer Abgasanlage eines Kraftfahrzeuges sind mit ihren Enden 3 und 4 einander zugewandt. An dem einen Ende 3 des Rohres 1 ist ein Flansch 5 mit einer konvexen kugeligen Fläche 6 befestigt, die zu dem Ende 4 des Rohres 2 hinweist. Am Ende 4 des Rohres 2 ist ein Flansch 7 mit einer konkaven kugeligen Fläche 8 befestigt, wobei die Fläche 8 zu dem Ende 3 des Rohres 1 hinweist und die konvexe Fläche 6 umschließt. Um die beiden Flansche 5 und 7 herum befindet sich ein Metallbalg 9, der mit seinem einen Endbund 10 mit dem Rohr 1 und mit dem anderen Endbund 11 an einem mit dem Rohr 2 fest verbundenen Steg 12 gasdicht befestigt ist. Der Metallbalg 9 steht dabei unter Ausnutzung der Verformbarkeit seiner Balgfalten 13 unter Zugspannung, so daß die beiden kugeligen Flächen 6 und 8 unter Vorspannung aneinanderliegen. Diese beiden Flächen 6 und 8 zentrieren damit die beiden Rohre 1 und 2 zueinander, wobei sie sich um den Mittelpunkt der die Flächen 6, 8 bildenden Kugel verschwenken können. Dabei wird der Metallbalg 9 elastisch verformt.

Bei einer Verbindung dieser Art ist die Zentrierung der Rohre 1, 2 getrennt von der Abdichtung. Die Dichtung erfolgt allein durch den Metallbalg 9. Sie ist damit keinerlei Verschleiß unterworfen. Die Zentrierung kann durch die Materialauswahl der Flansche 5 und 7 relativ reibungsarm ausgeführt werden.

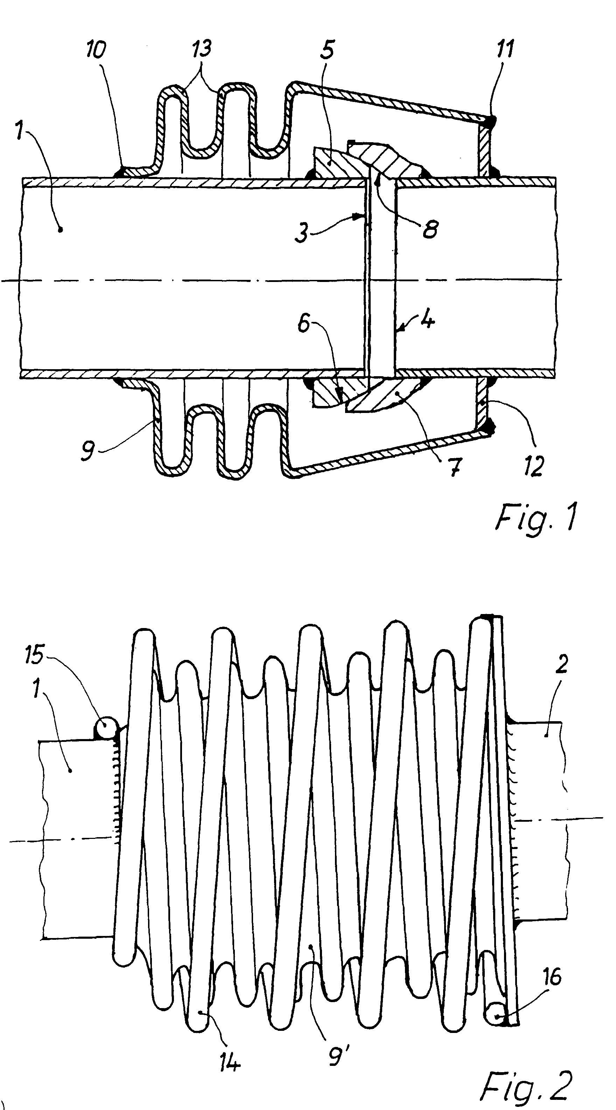

Ein weiteres Ausführungsbeispiel ist mit Figur 2 dargestellt, bei dem in gleicher Weise, wie in dem zuvor beschriebenen Ausführungsbeispiel, die beiden Rohre 1 und 2 mit kugeligen Flächen zueinander zentriert sind und die Abdichtung durch einen Metallbalg 9' erfolgt. Über den Metallbalg 9' hinweg ist jedoch noch eine als Schraubenfeder ausgebildete Zugfeder 14 angeordnet, die mit ihrem einen Ende 15 fest am Rohr 1 und mit dem anderen Ende 16 fest am Rohr 2 befestigt ist und unter Vorspannung steht. Eine solche Zugfeder 14 entlastet den Metallbalg 9' von Zugspannung und schützt ihn gleichzeitig vor mechanischen Beschädigungen von außen.

## Patentansprüche

1. Flexible Verbindung von Rohren, insbesondere von Abgasleitungsrohren bei Kraftfahrzeugen, an deren einander zugekehrten Enden Flansche befestigt sind, von denen einer mit einem eine ringförmige, kugelige, konvexe Fläche bildenden Fortsatz in eine dazu axial angeordnete ringförmige, kugelige, konkave Aufnahme des anderen Flansches hineinragt, ein sich über die an den kugelförmigen Flächen (6, 8) berührenden Flansche (5, 6) erstreckender Metallbalg (9) mit den Enden (3, 4) der Rohre (1, 2) gasdicht verbunden ist und wobei die Flansche über ihren Abstand zu verringern suchende Federelemente elastisch miteinander verbunden sind, **dadurch gekennzeichnet,** daß als Federelement der Metallbalg (9) vorgesehen ist, welcher unter Zugspannung mit den Rohren (1, 2) gasdicht verbunden ist.

2. Flexible Verbindung nach Anspruch 1, **dadurch gekennzeichnet,** daß über den Metallbalg (9) hinweg eine mit den beiden Rohren (1, 2) verbundene den Metallbalg (9) umhüllende Zugfeder (14) angeordnet ist.

## Claims

1. Flexible connection of pipes, in particular exhaust pipes in motor vehicles, to whose facing ends are attached flanges one of which extends by an extension forming an annular, spherical, convex surface into an annular, spherical, concave receptacle of the other flange arranged axially thereto, a metal bellows (9) extending over the flanges (5, 6) which contact each other at the spherical surfaces (6, 8) is gastightly connected to the ends (3, 4) of the pipes (1, 2) and wherein the flanges are elastically connected to each other by spring elements which seek to reduce the distance between them, characterised in that the metal bellows (9) which is gastightly connected to the pipes (1, 2) under tensile stress is provided as a spring element.

2. Flexible connection according to claim 1, characterised in that over the metal bellows (9) is arranged a tension spring (14) connected to the two pipes (1, 2) and encompassing the metal bellows (9).

## Revendications

1. Raccord flexible de tuyaux, en particulier de tubulures d'échappement de moteurs de véhicules, aux extrémités mutuellement en vis-à-vis desquels sont fixées des brides, dont l'une fait saillie par un embout formant une surface annulaire, sphérique convexe, dans un logement annulaire, sphérique concave, axial de l'autre bride, un soufflet métallique (9) qui s'étend sur les brides (5, 6) en contact par leurs surfaces sphériques (6, 8) étant lié de manière étanche au gaz aux extrémités (3, 4) des tuyaux (1, 2) et les brides étant liées l'une à l'autre de manière élastique par des éléments élastiques qui s'efforcent de réduire la distance entre ledistes brides, caractérisé par le fait que le soufflet métallique (9) est prévu en tant qu'élément élastique, lequel soufflet est relié aux tuyaux (1, 2) de manière étanche au gaz, sous précontrainte de tension.

2. Raccord flexible selon la revendication 1, caractérisé par le fait qu'en plus du soufflet métallique (9) un ressort de traction (14) qui entoure ledit soufflet métallique (9) est lié aux deux tuyaux (1, 2).
